# EUROPÄISCHE PATENTSCHRIFT

(11) **EP 2 161 478 B1**
(45) Veröffentlichungstag und Bekanntmachung des Hinweises auf die Patenterteilung: **19.10.2011**
(21) Anmeldenummer: 09010718.6
(22) Anmeldetag: 20.08.2009
(51) Int. Cl.: F16H 55/18, F16D 1/08

(54) **Zahnradanordnung**
Cogged wheel assembly
Agencement de roue dentée

(30) Priorität: 09.09.2008 AT 14052008
(43) Veröffentlichungstag der Anmeldung: 10.03.2010
(73) Patentinhaber: Miba Sinter Austria GmbH, 4663 Laakirchen (AT)
(72) Erfinder: Dickinger, Karl, 4655 Vorchdorf (AT); Spitzbart, Rudolf, 4663 Laakirchen (AT); Müller, Alexander, 4813 Altmünster (AT); Molinarie, Philippe, 92130 Issy Les Moulineaux (FR)
(74) Vertreter: Ofner, Clemens

(56) Entgegenhaltungen:
- EP-A- 0 606 864
- JP-A- 1 164 863
- JP-A- 9 152 015
- JP-A- 2000 257 698

## Beschreibung

Die Erfindung betrifft eine Zahnradanordnung mit einem Hauptzahnrad und einem gegenüber diesem relativ in Umfangsrichtung verdrehbaren Zahnrad, wobei das Hauptzahnrad eine Nabe aufweist, auf der das verdrehbare Zahnrad angeordnet ist, weiters mit einem Federelement das zwischen dem Hauptzahnrad und dem verdrehbaren Zahnrad angeordnet ist und mit dem das verdrehbare Zahnrad in Umfangsrichtung gegen das Hauptzahnrad vorgespannt ist, sowie mit einem weiteren Federelement, mit dem das verdrehbare Zahnrad in axialer Richtung gegen das Hauptzahnrad vorgespannt ist, wobei das weitere Federelement Zungen aufweist und wobei die Nabe oder das verdrehbare Zahnrad eine umlaufende Nut aufweist, in die zumindest einzelne der Zungen des Federelementes eingreifen.

Eine derartige Zahnradanordnung ist beispielsweise aus der von der Anmelderin stammenden WO 2005/090830 A1 bekannt, die ein Zahnrad für eine spielfreie Stirnradstufe mit einer Nabe, mit einem von der Nabe getragenem Zahnkranz, der entlang einer achsnormalen Teilungsebene in zwei Teilkränze, nämlich in einen nabenfesten Kranzteil und in einen diesen gegenüber koaxial drehbar gelagerten Kranzring, geteilt ist, und mit einer die Nabe umschließenden Ringfeder, die sich mit ihren einander in Umfangsrichtung gegenüberliegenden Enden an einstückig mit den beiden Teilkränzen ausgebildeten, einander in axialer Richtung überlappenden Stützstegen abstützt, die in Umfangsrichtung des Zahnkranzes hintereinander angeordnet sind. Der Stützsteg eines Teilkranzes durchsetzt den anderen Teilkranz in einer Durchtrittsöffnung mit Spiel in Umfangsrichtung und bildet der Stützsteg des Teilkranzes mit der Durchtrittsöffnung einen die Durchtrittsöffnung begrenzenden Montageanschlag für den anderen Stützsteg. Der Kranzring ist auf der Nabe beispielsweise mit Hilfe eines Sprengringes axial gesichert.

Es hat sich nun in der Praxis gezeigt, dass sich dieses Sicherungselement, das heißt der Sprengring, während der mechanischen Belastung des Zahnrades verschleißt, sodass Abnutzungen an diesem Sicherungselement auftreten können, die schlimmstenfalls dazu führen, dass dieses Sicherungselement aus seinem Sitz heraustritt und somit der drehbar gelagerte Kranzring in axialer Richtung nicht mehr gesichert ist, was gegebenenfalls zu einem Ausfall des Zahnrades führen kann.

Die gattungsgemäße JP 09-152015 A beschreibt ein split gear mit verbesserter Ausfallsicherheit. Dazu werden die Stifte, an denen sich die Ω-Feder abstützt und die im Hauptzahnrad und im verdrehbaren Zahnrad angeordnet sind, in aufgekohlten Büchsen angeordnet.

Die JP 01-164863 A offenbart ein Verfahren zur Einstellung der Phase der Zähne eines split gears mit Hilfe eines weiteren Zahnrades. Zur Axialsicherung des split gears ist u.a. ein Federelement vorgesehen, dessen Geometrie von der Kreisgeometrie abweicht.

Es ist daher Aufgabe der vorliegenden Erfindung, eine eingangs genannte Zahnradanordnung derart zu verbessern, dass die Ausfallswahrscheinlichkeit reduziert wird.

Diese Aufgabe der Erfindung wird durch die eingangs genannte Zahnradanordnung gelöst, bei der das weitere Federelement gegen eine Bewegung in Umfangrichtung gegenüber dem verdrehbaren Zahnrad oder dem Hauptzahnrad zumindest annähernd verdrehgesichert und zumindest annähernd wellenförmig verformt ist.

Mit zumindest annähernd verdrehgesichert ist gemeint, dass Bewegungen um maximal +/- 1° in Umfangsrichtung des Federelementes möglich sind.

Durch die Verdrehsicherung wird erreicht, dass sich das weitere Federelement relativ zum verdrehbaren Zahnrad oder zum Hautzahnrad nicht bzw. nur minimalst bewegen kann, sodass also durch mechanische Beanspruchungen der Zahnradanordnung eine derartige Relativbewegung des weiteren Federelementes nicht bzw. kaum ausgelöst werden kann, wodurch reibungsbedingte Abnutzungserscheinungen am weiteren Federelement reduziert werden können. Es ist damit möglich, das bisher eingesetzte Federelement vom Prinzip her weiter zu verwenden, sodass eine Neukonstruktion der aus der WO 2005/090830 A1 bekannten Zahnradanordnung nicht erforderlich ist. Dies ist insbesondere von Vorteil, da damit kein bzw. nur ein minimaler Formenneubau erforderlich ist, sodass also die Zahnradanordnung nach wie vor über sintertechnische Verfahren hergestellt werden kann, und damit die Produktionskosten für derartige Zahnradanordnungen wie aus dem Stand der Technik bekannt niedrig gehalten werden kann. Durch das zumindest annähernd wellenartig verformten Federelement wird eine größere Anlagefläche des Federelementes an dem verdrehbaren Zahnrad erreicht, wodurch ein besserer Formschluss zwischen dem verdrehbaren Zahnrad und dem Federelement bewirkt werden kann, sodass die Relativverstellung des Federelementes gegenüber dem verdrehbaren Zahnrad während der mechanischen Belastung der Zahnradanordnung vermieden bzw. verringert werden kann und damit ebenso Abnutzungserscheinungen reduziert werden können.

Bevorzugt wird eine Ausführungsvariante, bei der für zumindest eine der Zungen des weiteren Federelementes eine weitere Ausnehmung ausgebildet ist, in die die Zunge, insbesondere mit ihrem freien Ende, eingreifen kann. Durch diese konstruktiv einfache Ausgestaltung kann erreicht werden, dass mit der zusätzlichen Ausnehmung, die sintertechnischer relativ einfach herstellbar ist, eine Verdrehsicherung erreicht wird, ohne dass damit eine Änderung des weiteren Federelementes hinsichtlich seiner Geometrie erforderlich wird.

In einer speziellen Ausführungsvariante hierzu kann jedoch diese weitere Ausnehmung am Federelement selbst ausgebildet sein und die Nabe einen Fortsatz zum Eingriff in diese Ausnehmung aufweisen. Es wird damit eine einfachere Montage des weiteren Federelementes an der Zahnradanordnung ermöglicht.

Bevorzugt wird weiters, wenn die weitere Ausnehmung eine maximale Breite aufweist, die zumindest annähernd so groß ist wie die maximal Breite der Zunge. Mit zumindest annähernd ist hierbei gemeint, dass diese weitere Ausnehmung keine kleinere maximale Breite aufweist als die maximale Breite der Zunge, sondern diese weitere Ausnehmung zur einfacheren Montage nur geringfügig für das Einfädeln der Zunge größer ist. Bevorzugt liegt jedoch die Zunge an zumindest zwei gegenüberliegenden Seitenwänden der Ausnehmung an, wodurch eine höhere Verdrehsicherheit des weiteren Federelementes erreicht werden kann.

In Ausführungsvarianten hierzu kann einerseits die weitere Ausnehmung zumindest bereichsweise konisch verlaufend ausgebildet sein, bzw. kann die Zunge zumindest bereichsweise konisch verlaufend ausgebildet sein, wodurch einerseits die Ausnehmung im Anfangsbereich mit einer größeren Breite ausgeführt sein kann, sodass die Zunge einfacher in diese Ausnehmung eingerührt werden kann, wobei gleichzeitig durch den konischen Verlauf über zumindest einen Teilbereich aufgrund der Federspannung dieser Bereich zur Anlage an den besagten einander gegenüberliegenden Seitenwänden der Ausnehmung gelangt. Darüber hinaus ist durch die konische Ausführung auch eine Radialbewegung des weiteren Federelementes während des Betriebes der Zahnradanordnung ausgleichbar, ohne dass die Verdrehsicherung verloren geht.

Die Ausnehmung kann auch zwischen zwei Erhebungen ausgebildet sein, die an der Nabe angeordnet sind, sodass also diese Ausnehmung nicht zwingend als Vertiefung in der Nabe aufgeführt ist und damit eine Materialschwächung in der Zahnradanordnung vermieden werden kann. Zudem sind derartige Erhebungen produktionstechnisch einfacher herstellbar.

In einer Alternative hierzu ist es möglich, dass die weitere Ausnehmung zwischen zwei Erhebungen ausgebildet ist, die an dem verdrehbaren Zahnrad angeordnet sind.

Es ist auch möglich, dass die weitere Ausnehmung in der umlaufenden Nut ausgebildet ist, womit zwar der Nachteil verbunden ist, dass gegebenenfalls eine der Zungen des weiteren Federelementes länger sein muss um den Eingriff in diese Ausnehmung zu ermöglichen, andererseits jedoch damit der Vorteil erreicht wird, der den Nachteil überwiegt, dass die Zahnradanordnung von außen im Vergleich zum Stand der Technik geometrisch unverändert bleibt.

In einer anderen Ausführungsvariante der Erfindung ist vorgesehen, dass anstelle der umlaufenden Nut pro Zunge des Federelementes eine gesonderte Ausnehmung angeordnet ist. Es können damit fertigungstechnisch Vorteile erreicht werden, indem eine Drehbearbeitung der Zahnradgruppe, das heißt der Nabe, zur Herstellung dieser Nut nicht erforderlich ist, sondern diese Ausnehmungen bereits während der sintertechnischen Herstellung, das heißt des Pressvorganges selbst, in der Nabe erzeugt werden können.

Um die Sicherheit des Eingriffes der Zunge in die Ausnehmung zu erhöhen, ist nach einer anderen Ausführungsvariante vorgesehen, dass das freie Ende des Federelementes eine Umformung aufweist, die in Richtung auf die Nabe oder das verdrehbare Zahnrad weist.

Zum besseren Verständnis der Erfindung wird diese anhand der nachfolgenden Figuren näher erläutert.

Es zeigen jeweils in stark schematisch vereinfachter Darstellung:
- Fig. 1: eine Zahnradgruppe gemäß dem Stand der Technik in Explosionsdarstellung;
- Fig. 2: eine erste Ausführungsvariante einer erfindungsgemäßen Zahnradgruppe in Sei- tenansicht geschnitten;
- Fig. 3: das verdrehbare Zahnrad der Zahnradgruppe mit dem weiteren Federelement in Seitenansicht geschnitten;
- Fig. 4: das Federelement nach Fig. 3 in Seitenansicht;
- Fig. 5: das Federelement nach Fig. 3 in Draufsicht;
- Fig. 6: eine weitere Ausführungsvariante der Zahnradanordnung in Seitenansicht ge- schnitten;
- Fig. 7: einen schematischen Ausschnitt aus der Zahnradanordnung nach Fig. 6 in Drauf- sicht;
- Fig. 8: ein Detail des Eingriffes der Zunge in die weitere Ausnehmung nach Fig. 7;
- Fig. 9: eine weitere Ausführungsvariante einer Zahnradanordnung in Seitenansicht ge- schnitten;
- Fig. 10: einen schematischen Ausschnitt aus der Zahnradanordnung nach Fig. 9 in Drauf- sicht;
- Fig. 11: ein Detail des Eingriffes der Zunge in die weitere Ausnehmung nach Fig. 10;
- Fig. 12: eine Ausführungsvariante der Erfindung in Seitenansicht mit konisch ausgebilde- ter Ausnehmung im Teilschnitt;
- Fig. 13: eine Ausführungsvariante der Zahnradanordnung in Seitenansicht mit doppelt konisch verlaufender Zunge im Teilschnitt;
- Fig. 14: eine Seitenansicht des Hauptzahnrades der Zahnradanordnung gemäß einer weite- ren Ausführungsvariante der Erfindung;
- Fig. 15: die Frontansicht auf das Hauptzahnrad gemäß Fig. 14;
- Fig. 16: eine Ausführungsvariante des weiteren Federelementes in Draufsicht;
- Fig. 17: eine weitere Ausführungsvariante des weiteren Federelementes in Draufsicht;
- Fig. 18: eine andere Ausführungsvariante des weiteren Federelementes in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1 oder 5,5 bis 10.

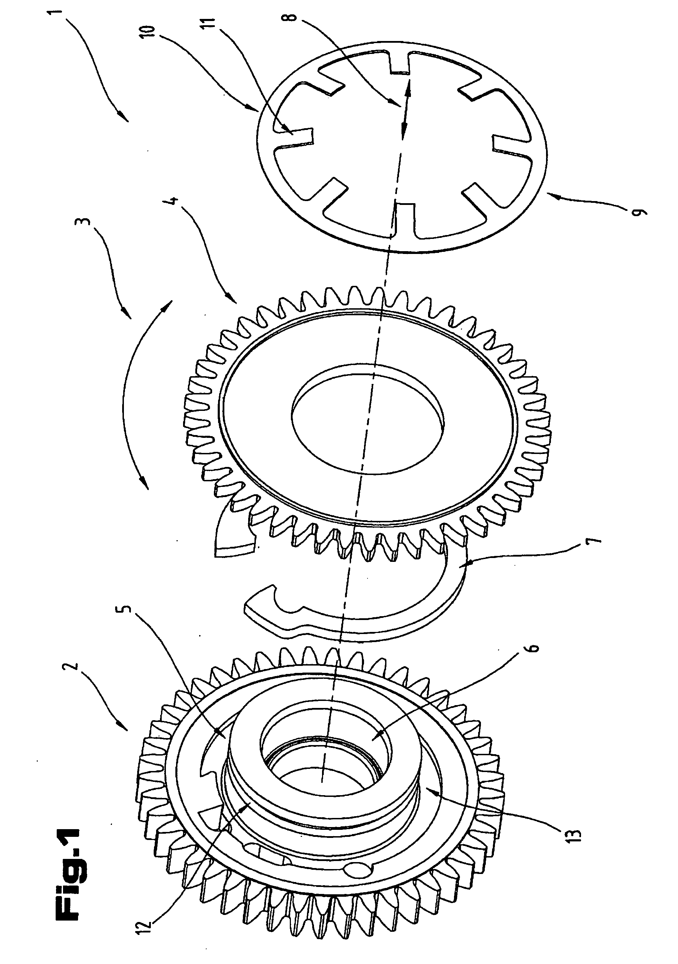

Fig. 1 zeigt in Explosionsdarstellung eine Zahnradanordnung 1, wie sie aus dem Stand der Technik bekannt ist. Diese Zahnradanordnung 1, auch "split-gear" genannt, weist ein Hauptzahnrad 2 und ein gegenüber diesem relativ in einer Umfangsrichtung 3 verdrehbares Zahnrad 4 auf, wobei das Hauptzahnrad 2 eine Nabe 5 aufweist, die insbesondere einstückig mit dem Hauptzahnrad 2 ausgebildet ist. Das verdrehbare Zahnrad 4 ist auf der Nabe 5 des Hauptzahnrades 2 verdrehbar angeordnet. Die Nabe 5 weist eine Ausnehmung 6 in Form einer Bohrung zur Aufnahme einer nicht dargestellten Welle auf.

Das verdrehbare Zahnrad 4 ist mittels eines Federelementes 7, das in diesem Fall also so genannte Ω - Feder ausgebildet ist, in Umfangsrichtung 3 gegenüber dem Hauptzahnrad 2 vorgespannt, wie dies in der WO 2005/090830 A1 beschrieben ist, die somit in diesem Umfang des prinzipiellen Aufbaus der Zahnradanordnung 1 zum Inhalt vorliegender Beschreibung gehört. Für die Vorspannung ist, wie eingangs beschrieben, ein Stützsteg ausgebildet, der einen Montageanschlag für einen weiteren Stützsteg bildet. Das Federelement 7 liegt an diesen Stützstegen mit seinen beiden offenen Endbereichen an.

Um das weitere verdrehbare Zahnrad 4 auch in einer axialen Richtung 8 gegen das Hauptzahnrad vorzuspannen, ist ein weiteres Federelement 9, das bei dieser Ausführungsvariante die Form einer Tellerfeder, insbesondere einer im weitesten Sinne zu bezeichnenden geschlitzten Tellerfeder, angeordnet. Dieses weitere Federelement 9 weist einen äußeren Ring 10 auf, von dem schräg radial nach innen weisend mehrere Zungen 11, so genannte Federzungen, abstehen. Diese Zungen 11 werden von einer umlaufenden Nut 12, die in einem Endbereich 13 der Nabe 5 ausgebildet ist, aufgenommen. Durch die Federspannung wird somit das weitere verdrehbare Zahnrad 4 in der axialen Richtung gegenüber dem Hauptzahnrad vorgespannt.

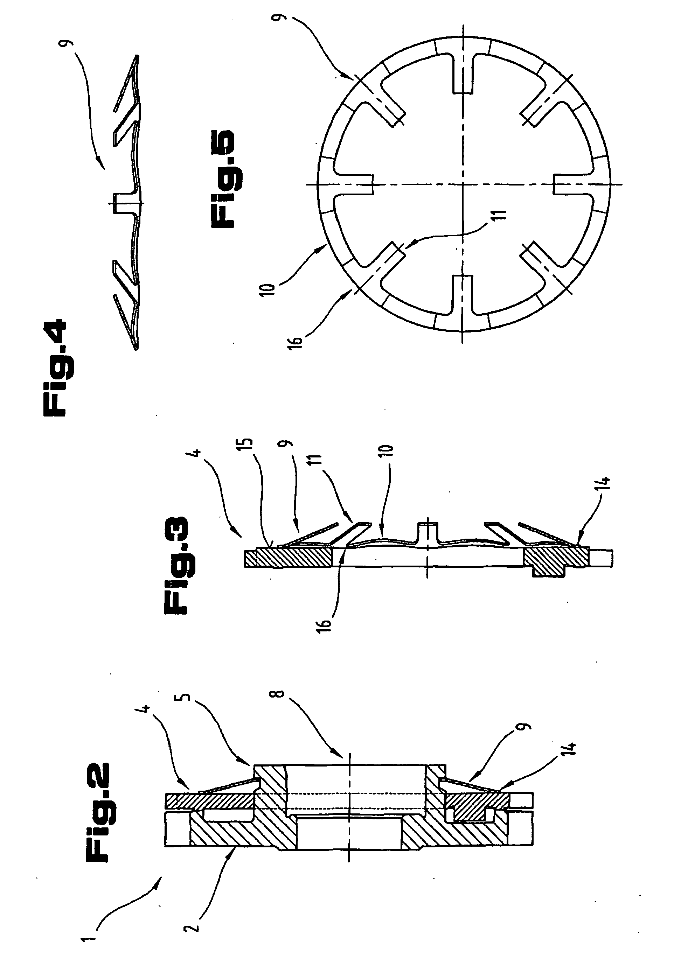

Die Fig. 2 bis 5 zeigen nun eine erste Ausführungsvariante der Erfindung zur Erhöhung der Ausfallsicherheit der Zahnradanordnung 1, die den Vorteil aufweist, dass mit Ausnahme des weiteren Federelementes 9, die wiederum die Form einer Tellerfeder hat, keine konstruktiven Änderungen an der Zahnradanordnung 1, wie dies im Nachfolgenden noch näher beschrieben wird, erforderlich sind.

Aus Fig. 2 ist wiederum das Hauptzahnrad 2, das daran anliegende verdrehbare Zahnrad 4, das mit dem weiteren Federelement 9 gegen das Hauptzahnrad 2 in axialer Richtung 8 vorgespannt ist, ersichtlich. Das verdrehbare Zahnrad 4 ist dabei auf der Nabe 5 angeordnet.

Fig. 3 zeigt die Anordnung des weiteren Federelementes 9 an dem verdrehbaren Zahnrad 4. Deutlich erkennbar ist insbesondere auch aus Fig. 4, dass dieses weitere Federelement 9 wellenförmig umgeformt ist, sodass der äußere Ring 10 nicht nur linienförmig an einem Ringsteg 14, der an einer äußeren Oberfläche 15, die vom Hauptzahnrad 2 weg weist, an dem verdrehbaren Zahnrad 4 anliegt, sondern die Anlagefläche durch diese Wellenform vergrößert wird, wodurch der Formschluss vergrößert werden kann. Insbesondere liegen dabei Bereiche 16 des Ringes 10 an der äußeren Oberfläche 15 des verdrehbaren Zahnrades 4 an, denen die Zungen 11 zugeordnet sind, das heißt von denen sich die Zungen 11 radial schräg nach innen verlaufend erstrecken.

Der Vollständigkeit halber sei angemerkt, dass anstelle des Ringsteges 14 an der Oberfläche 15 des verdrehbaren Zahnrades 4 auch eine ringförmige Nut ausgebildet sein kann, in der sich das weitere Federelement 9 über den äußeren Ring 10 abstützt.

Es besteht im Rahmen der Erfindung auch die Möglichkeit, die Anordnung des weiteren Federelementes 9 umzudrehen, sodass also die Zungen 11 radial schräg nach außen verlaufend ausgebildet sind. Der umlaufende Ring 10 stützt sich demzufolge an der umlaufenden Nut 12 ab, und die Zungen 11 an dem Ringsteg 14, wobei eine entsprechende Ringnut in der Oberfläche 15 des verdrehbaren Zahnrades 4 vorgesehen ist. Für diese Ausführungsvariante ist es von Vorteil, wenn das weitere Federelement im Ring 10 eine Schnittstelle aufweist, sodass eine weitere Öffnung des Ringes 10 für das Überschieben dieses Federelementes 9 über die Nabe 5 ermöglicht wird.

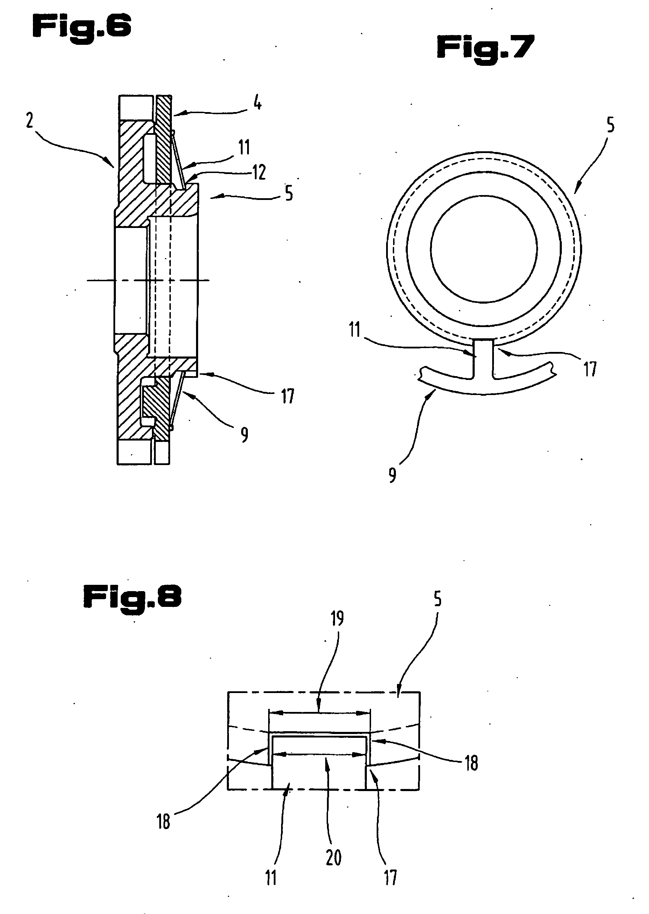

Die Fig. 6 bis 8 zeigen eine andere Ausführungsvariante der Erfindung. Dabei ist in Fig. 6 wiederum das Hauptzahnrad 2, das daran anliegende verdrehbare Zahnrad 4 auf der Nabe 5 des Hauptzahnrades 2 sowie das weitere Federelement 9 im Schnitt dargestellt. Das Federelement 9 weist wiederum die Zungen 11 auf, die in der Nut 12 der Nabe 5 angeordnet sind.

Wie aus Fig. 7 und im Detail aus Fig. 8 ersichtlich, ist in der Nabe 5 eine weitere Ausnehmung 17 vorgesehen, die insbesondere die Tiefe der Nut 12 aufweisen kann, wie dies aus Fig. 6 ersichtlich ist, sodass also der Nutengrund der Nut 12 nach außen hin verlängert ausgeführt ist.

Diese weitere Ausnehmung 17 dient zur Aufnahme einer der Zungen 11 des weiteren Federelementes 9. Es wird damit verhindert, dass sich diese Zunge 11 in der Nut 12 frei bewegen kann, aufgrund des bei einer Drehung in Umfangsrichtung vorhandenen Anschlages an einer Seitenwand 18 der Ausnehmung 17.

Wie im Detail nach Fig. 8 zu sehen ist, weist die Ausnehmung 17 eine Breite 19 auf, die geringfügig größer als eine Breite 20 der Zunge 11 ist.

Die Breite 19 der Ausnehmung 17 kann jedoch so ausgeführt sein, dass diese der Breite 20 der Zunge 11 entspricht, sodass also die Zunge 11 formschlüssig in diese Ausnehmung 17 passt.

Es besteht weiters die Möglichkeit, dass mehrere Ausnehmungen 17 über den Umfang der Nabe 5 verteilt angeordnet sind, sodass mehrere Zungen 11 in derartigen Ausnehmungen 17 aufgenommen sind. Beispielsweise besteht die Möglichkeit einander gegenüberliegende Zungen 11 des weiteren Federelementes 9 in entsprechende Ausnehmungen 17 anzuordnen.

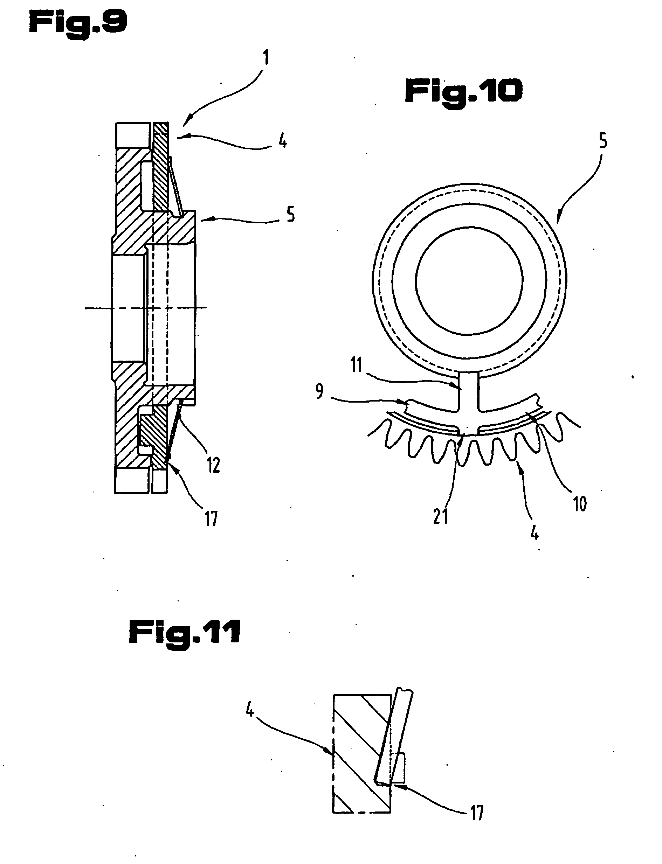

Die Fig. 9 bis 11 zeigen eine hierzu umgekehrte Ausführung der Zahnradanordnung 1, das heißt, dass die Ausnehmung 17 im weiteren verdrehbaren Zahnrad 4 und nicht in der Nabe 5 angeordnet ist. Dazu kann diese Ausnehmung 17, wie dies im Detail in Fig. 11 dargestellt ist, als schräg nach innen verlaufender Einstich im verdrehbaren Zahnrad 4 angeordnet werden. Selbstverständlich kann diese Ausnehmung 17 aber auch eine andere Geometrie, beispielsweise eine recheckige Form oder dergleichen aufweisen, jedoch ist die schräg nach innen verlaufende Ausführungsvariante, wie dies in Fig. 11 dargestellt ist, herstellungsbedingt die bevorzugte.

Um das weitere Federelement 9 auch bei dieser Ausführungsvariante mit schräg nach innen radial verlaufenden Zungen 11, die wiederum mit Ausnahme einer Zunge 11 die in der Ausnehmung 17 Platz findet, in der umlaufenden Nut 12 der Nabe 5 angeordnet sind, auszubilden, wie dies im Wesentlichen aus Fig. 5 hervorgeht, weist das Federelement 9 bei dieser Ausführungsvariante, insbesondere in zumindest einem der Zungen 11 gegenüberliegenden Bereich des Ringes 10, zumindest einen radial nach außen vorragenden Fortsatz 21 auf, der von der Ausnehmung 17 aufgenommen wird.

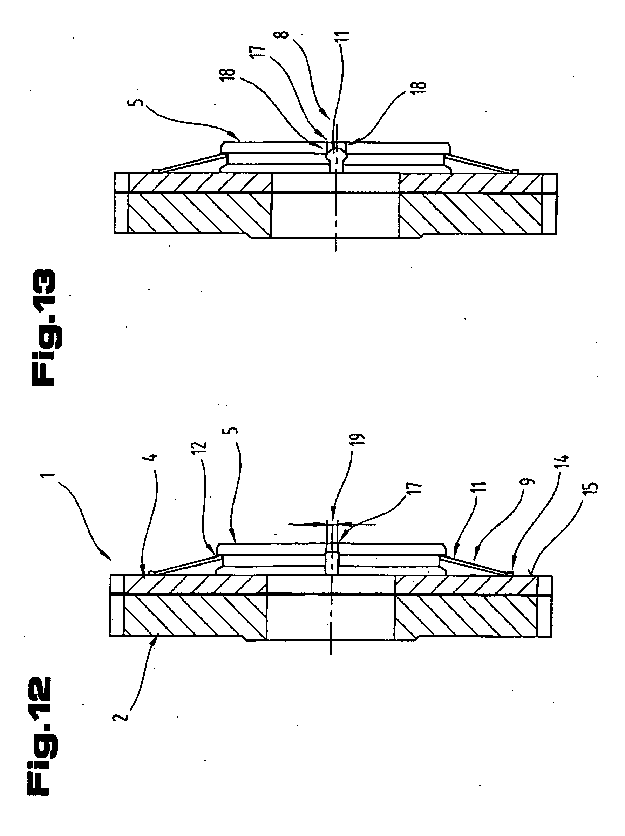

Fig. 12 zeigt eine Zahnradanordnung 1 in Seitenansicht mit dem Hauptzahnrad 2, dem daran anliegenden verdrehbaren Zahnrad 4, dem Federelement 9, das einerseits über den Ringsteg 14 an der äußeren Oberfläche 15 des verdrehbaren Zahnrades 4 und andererseits in der umlaufenden Nut 12 an der Nabe 5 abgestützt ist. Diese Ausführungsvariante ist vom Prinzip her ähnlich zu jener nach den Fig. 6 bis 8, da wiederum in dem an der Nut 12 anschließenden Steg der Nabe 5 eine Ausnehmung 17 vorgesehen ist, um darin eine Zunge 11 des weiteren Federelementes 9 aufzunehmen. Allerdings ist bei dieser Ausführungsvariante der Erfindung diese Ausnehmung 17 konisch nach außen sich verjüngend ausgebildet. Es wird damit erreicht, dass auch bei geringfügiger Abnutzung der Zunge 11 in dieser Ausnehmung 17 durch die sich verringernde Breite 19 der Ausnehmung 17 ein sicheres Anliegen der Zunge 11 in dieser Ausnehmung 17 ermöglicht wird.

In einer Ausführungsvariante hierzu zeigt Fig. 13 eine Variante bei der die Ausnehmung 17 in der Nabe 5 mit in axialer Richtung 8 gerade verlaufenden Seitenwänden 18 ausgebildet ist, dafür jedoch die Zunge 11 konisch verlaufend über einen Teilbereich ausgeführt ist. Im speziellen Fall der Ausführung nach Fig. 13 ist die Zunge 11 im vorderen, freien Endbereich doppelt konisch ausgebildet, sodass sich eine annähernd pilzförmige Endform dieses Endbereiches ergibt. Es wird auch mit dieser Ausführungsvariante wiederum die sichere Anlage der Zunge 11 an den Seitenwänden 18 der Ausnehmung 17 erreicht, wobei ein gegebenenfalls auftretender Verschleiß der Zunge 11 dadurch minimiert werden kann, dass die Zunge 11 im Wesentlichen punktförmig an diesen Seitenwänden 18, wie dies auch nach Fig. 12 der Fall ist, anliegt.

Selbstverständlich besteht auch die Möglichkeit, dass sowohl die Ausnehmung 17 über zumindest einen Teilbereich der Länge der Seitenwände 18 konisch als auch die Zunge 11 über zumindest einen Teilbereich der Länge konisch ausgebildet ist. Darüber hinaus kann auch die Zunge 11 lediglich eine einfach konische Ausführung aufweisen.

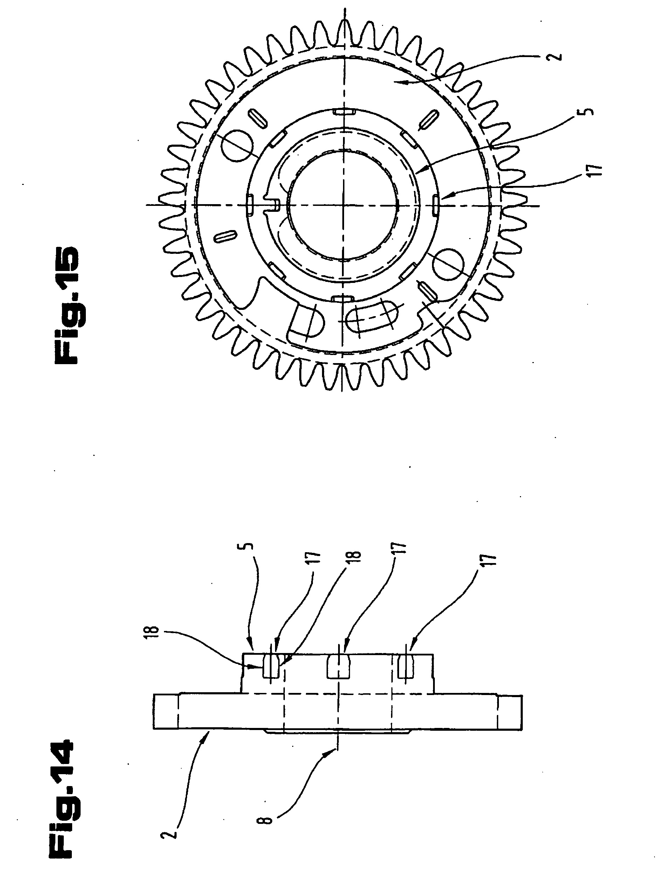

In den Fig. 14 und 15 ist eine Ausführungsvariante der Erfindung dargestellt, bei der anstelle der Nut 12 (zum Beispiel Fig. 1) in der Nabe 5 pro Zunge 11 (nicht dargestellt) jeweils eine eigene Ausnehmung 17 vorgesehen ist. Diese Ausnehmungen 17 sind dabei wiederum im vorderen Endbereich der Nabe 5 konisch verlaufend und sich verjüngend ausgebildet, jedoch besteht auch hier wiederum die Möglichkeit, dass die Seitenflächen 18 der Ausnehmungen 17 in axialer Richtung 8 gerade verlaufend ausgebildet sind. Aus Gründen der Übersichtlichkeit wurde in den Fig. 14 und 15 auf die Darstellung des verdrehbaren Zahnrades 4 verzichtet, sodass also nur das Hauptzahnrad 2 dargestellt ist.

Bei sämtlichen Ausführungsvarianten nach den Fig. 2 bis 13 besteht auch die Möglichkeit, dass die Ausnehmungen 17 nicht vertieft im jeweiligen Bauteil der Zahnradgruppe 1 ausgebildet sind, sondern diese Ausnehmungen 17 durch Erhebungen, also beispielsweise Stege in axialer Richtung 8, gebildet werden, wofür pro Ausnehmung 17 zwei dieser Stege angeordnet werden und die jeweilige Zunge 11 zwischen die Stege eingreift. Es besteht dabei die Möglichkeit, dass diese Erhebungen dem Endbereich der Zunge 11 zugeordnet sind, oder dass die Zunge 11 im Bereich ihrer Längserstreckung in die zwischen den Erhebungen ausgebildete Ausnehmung 17 eingreift.

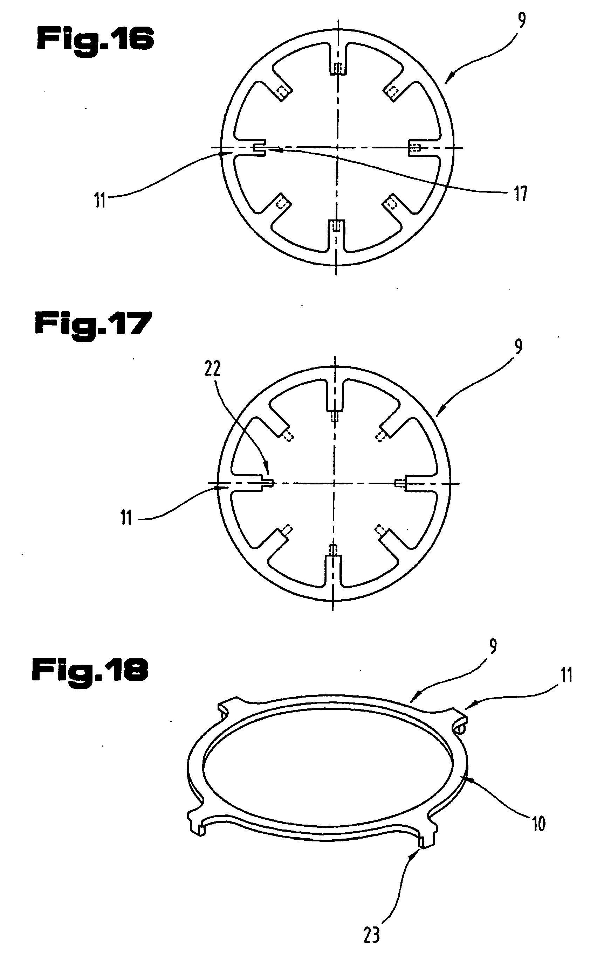

Eine konstruktiv geringfügig einfacher zu gestaltende Möglichkeit ist damit erreichbar, wenn das weitere Federelement 9, wie dies in Fig. 16 dargestellt ist, an zumindest einer der Zungen 11 im freien Endbereich die Ausnehmung 17 aufweist zur Aufnahme eines soeben angesprochenen Steges bzw. einer Erhebung, beispielsweise an der Nabe 5. Auch hier sind wieder konische Ausführungen dieser Ausnehmung 17 möglich.

Es besteht weiters die Möglichkeit, dass, wie dies in Fig. 16 strichliert angedeutet ist, mehrere, also beispielsweise auch sämtliche, der am weiteren Federelement 9 angeordneten Zungen 11 derartige Ausnehmungen 17 aufweisen.

In Umkehrung hierzu zeigt Fig. 17 eine Ausführungsvariante der Erfindung, bei der zumindest eine der Zungen 11 des weiteren Federelementes 9 nicht die Ausnehmung 17 aufweist, sondern einen Fortsatz 22, der am freien Ende der Zunge 11 schräg radial nach innen verlaufend angeordnet ist, wobei dieser Fortsatz 22 eine geringere Breite in Umfangsrichtung als die Zunge 11 aufweist. Dieser Fortsatz 22 kann entweder in einer Ausnehmung 17, die als Vertiefung ausgebildet ist, oder in einer Ausnehmung 17 zwischen zwei Stegen, wie dies voran stehend beschrieben wurde, angeordnet werden.

Schließlich zeigt Fig. 18 eine Ausführungsvariante des weiteren Federelementes 9, bei der am Ring 10 radial nach außen verlaufend die Zungen 11 angeordnet sind. Bei dieser Ausführungsvariante weisen die Zungen 11 an ihrem freien Ende eine Abwinkelung 23 auf, die beispielsweise im rechten Winkel von der Zunge 11 absteht. Diese Abwinkelung 23 kann wiederum eine geringere Breite als die Zunge 11 aufweisen.

Zur Anordnung dieses weiteren Federelementes 9 an dem verdrehbaren Zahnrad 2 werden in der äußeren Oberfläche 15 dieses verdrehbaren Zahnrades 2 Einstiche, also Ausnehmungen 17 vorgesehen, welche diese Abwinkelungen 23 aufnehmen.

Der Ring 10 selbst ist wiederum geteilt ausgeführt und wird in der Nut 12 der Nabe 5 gehaltert, wie dies bereits voran stehend erläutert wurde.

Auch bei dieser Ausführungsvariante des weiteren Federelementes 9 besteht die Möglichkeit, dass lediglich eine oder mehrere der Zungen 11 mit dieser Abwinkelung 23 versehen ist bzw. sind.

Es sei angemerkt, dass bei sämtlichen Ausführungsvarianten die weiteren Federelemente 9 jeweils umgekehrt ausgeführt sein kann, also beispielsweise der Ring 10 innen liegend und die Zungen 11 radial schräg nach außen verlaufend, wie dies bereits voran stehend erläutert wurde. Die geringfügigen Adaptierungen die hierfür erforderlich sind, wurden ebenfalls voran stehend bereits erläutert.

Es sind im Rahmen der Erfindung auch Mischvarianten aus den gezeigten Ausführungsformen möglich, beispielsweise dass das weitere Federelement 9 sowohl Ausnehmungen 17 im Endbereich eines Teils der Zungen 11 als auch die Fortsätze 22 in einem weiteren Teil der Zungen 11 aufweist. Des Weiteren können sowohl Ausnehmungen 17 in der Nabe 5 und dem verdrehbaren Zahnrad 4 vorgesehen werden.

Der Vollständigkeit halber soll abschließend noch daraufhingewiesen sein, dass das Hauptzahnrad 2 und/oder das verdrehbare Zahnrad 4 vorzugsweise aus einem Sinterstahl hergestellt sind, das weitere Federelement 9 aus einem Federstahl besteht.

Die Ausführungsbeispiele zeigen mögliche Ausführungsvarianten der Zahnradanordnung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der Zahnradanordnung 1 diese bzw. deren Bestandteile teilweise unmaßstäblich und/oder vergrößert und/oder verkleinert dargestellt wurden.

Es können die einzelnen in den Fig. 2, 3, 4, 5; 6, 7 8; 9, 10, 11; 12; 13, 14, 15; 16; 17; 18 gezeigten Ausführungen den Gegenstand von eigenständigen, erfindungsgemäßen Lösungen bilden.

### Bezugszeichenaufstellung

- 1: Zahnradanordnung
- 2: Hauptzahnrad
- 3: Umfangsrichtung
- 4: Zahnrad
- 5: Nabe

- 6: Ausnehmung
- 7: Federelement
- 8: Richtung
- 9: Federelement
- 10: Ring

- 11: Zunge
- 12: Nut
- 13: Endbereich
- 14: Ringsteg
- 15: Oberfläche

- 16: Bereich
- 17: Ausnehmung
- 18: Seitenwand
- 19: Breite
- 20: Breite

- 21: Fortsatz
- 22: fortsatz
- 23: Abwinkelung

## Patentansprüche

1. Zahnradanordnung (1) mit einem Hauptzahnrad (2) und einem gegenüber diesem relativ in Umfangsrichtung (3) verdrehbaren Zahnrad (4), wobei das Hauptzahnrad (2) eine Nabe (5) aufweist, auf der das verdrehbare Zahnrad (4) angeordnet ist, weiters mit einem Federelement (7), das zwischen dem Hauptzahnrad (2) und dem verdrehbaren Zahnrad (4) angeordnet ist, und mit dem das verdrehbare Zahnrad (4) in Umfangsrichtung (3) gegen das Hauptzahnrad (2) vorgespannt ist, sowie mit einem weiteren Federelement (9), mit dem das verdrehbare Zahnrad (4) in axialer Richtung (8) gegen das Hauptzahnrad (2) vorgespannt ist, wobei das weitere Federelement (9) Zungen (11) aufweist, und wobei die Nabe (5) oder das verdrehbare Zahnrad (4) eine umlaufende Nut (12) aufweist, in die zumindest einzelne der Zungen (11) des weiteren Federelementes (9) eingreifen, **dadurch gekennzeichnet, dass** das weitere Federelement (9) gegen eine Bewegung in Umfangsrichtung (3) gegenüber dem verdrehbaren Zahnrad (4) oder dem Hauptzahnrad (2) zumindest annähernd verdrehgesichert und zumindest annähernd wellenförmig verformt ist.

2. Zahnradanordnung (1) nach Anspruch 1, **dadurch gekennzeichnet, dass** für zumindest eine der Zungen (11) des weiteren Federelementes (9) eine weitere Ausnehmung (17) ausgebildet ist, in die die Zunge (11), insbesondere mit ihrem freien Ende, eingreift.

3. Zahnradanordnung (1) nach Anspruch 1, **dadurch gekennzeichnet, dass** eine weitere Ausnehmung (17) am weiteren Federelement (9) ausgebildet ist und die Nabe (5) einen Fortsatz zum Eingriff in die Ausnehmung (17) aufweist.

4. Zahnradanordnung (1) nach Anspruch 2 oder 3, **dadurch gekennzeichnet, dass** die weitere Ausnehmung (17) eine maximale Breite (19) aufweist, die zumindest annähernd so groß ist wie eine maximale Breite (20) der Zunge (11) oder des Fortsatzes an der Nabe (5) in gleicher Richtung.

5. Zahnradanordnung (1) nach einem der Ansprüche 2 bis 4, **dadurch gekennzeichnet, dass** die weitere Ausnehmung (17) zumindest bereichsweise konisch verlaufend ausgebildet ist.

6. Zahnradanordnung (1) nach einem der Ansprüche 2 bis 5, **dadurch gekennzeichnet, dass** die Zunge (11) zumindest bereichsweise konisch verlaufend ausgebildet ist.

7. Zahnradanordnung (1) nach einem der Ansprüche 2 oder 3 bis 6, **dadurch gekennzeichnet, dass** die weitere Ausnehmung (17) zwischen zwei Erhebungen ausgebildet ist, die an der Nabe (5) angeordnet sind.

8. Zahnradanordnung (1) nach einem der Ansprüche 2 oder 3 bis 6, **dadurch gekennzeichnet, dass** die weitere Ausnehmung (17) zwischen zwei Erhebungen ausgebildet ist, die an dem verdrehbaren Zahnrad (4) angeordnet sind.

9. Zahnradanordnung (1) nach einem der Ansprüche 1 bis 8, **dadurch gekennzeichnet, dass** die weitere Ausnehmung (17) in der umlaufenden Nut (12) ausgebildet ist.

10. Zahnradanordnung (1) nach einem der Ansprüche 1 bis 9, **dadurch gekennzeichnet, dass** anstelle der umlaufenden Nut (12) pro Zunge des weiteren Federelementes (9) eine Ausnehmungen (17) angeordnet ist.

11. Zahnradanordnung (1) nach einem der Ansprüche 1 bis 10, **dadurch gekennzeichnet, dass** das freie Ende des weiteren Federelementes (9) eine Abwinkelung (23) aufweist, die in Richtung auf die Nabe (5) oder das verdrehbare Zahnrad (4) weist.

## Claims

1. Toothed wheel assembly (1) with a main toothed wheel (2) and a toothed wheel (4) which is able to turn in the circumferential direction (3) relative to the latter, which main toothed wheel (2) has a hub (5) on which the rotatable toothed wheel (4) is disposed, further comprising a spring element (7) disposed between the main toothed wheel (2) and the rotatable toothed wheel (4), by means of which the rotatable toothed wheel (4) is biased in the circumferential direction (3) against the main toothed wheel (2), and with another spring element (9) by means of which the rotatable toothed wheel (4) is biased in the axial direction (8) against the main toothed wheel (2), and the other spring element (9) has tongues (11), and the hub (5) or rotatable toothed wheel (4) has a circumferentially extending groove (12) in which at least individual ones of the tongues (11) of the other spring element (9) locate, **characterised in that** the other spring element (9) is at least more or less prevented from turning and is at least approximately wave-shaped to prevent a movement in the circumferential direction (3) relative to the rotatable toothed wheel (4) or main toothed wheel (2).

2. Toothed wheel assembly (1) as claimed in claim 1, **characterised in that** another recess (17) is provided for at least one of the tongues (11) of the other spring element (9), in which the tongue (11) locates, in particular by its free end.

3. Toothed wheel assembly (1) as claimed in claim 1, **characterised in that** another recess (17) is provided on the other spring element (9) and the hub (5) has a projection for locating in the recess (17).

4. Toothed wheel assembly (1) as claimed in claim 2 or 3, **characterised in that** the other recess (17) has a maximum width (19) which is at least approximately as big as a maximum width (20) of the tongue (11) or projection on the hub (5) in the same direction.

5. Toothed wheel assembly (1) as claimed in one of claims 2 to 4, **characterised in that** the other recess (17) is of a conically extending design in at least certain regions.

6. Toothed wheel assembly (1) as claimed in one of claims 2 to 5, **characterised in that** the tongue (11) is of a conically extending design in at least certain regions.

7. Toothed wheel assembly (1) as claimed in one of claims 2 or 3 to 6, **characterised in that** the other recess (17) is disposed between two raised areas disposed on the hub (5).

8. Toothed wheel assembly (1) as claimed in one of claims 2 or 3 to 6, **characterised in that** the other recess (17) is disposed between two raised areas disposed on the rotatable toothed wheel (4).

9. Toothed wheel assembly (1) as claimed in one of claims 1 to 8, **characterised in that** the other recess (17) is disposed in the circumferentially extending groove (12).

10. Toothed wheel assembly (1) as claimed in one of claims 1 to 9, **characterised in that**, instead of the circumferentially extending groove (12), a recess (17) is provided for each tongue of the other spring element (9).

11. Toothed wheel assembly (1) as claimed in one of claims 1 to 10, **characterised in that** the free end of the other spring element (9) has an angled piece (23) pointing in the direction towards the hub (5) or the rotatable toothed wheel (4).

## Revendications

1. Agencement de roue dentée (1) avec une roue dentée principale (2) et une roue dentée (4) apte à tourner par rapport à celle-ci relativement dans la direction périphérique (3), où la roue dentée principale (2) présente un moyeu (5) sur lequel est disposée la roue dentée tournante (4), en outre avec un élément de ressort (7) qui est disposé entre la roue dentée principale (2) et la roue dentée tournante (4), et au moyen duquel la roue dentée tournante (4) est précontrainte dans la direction périphérique (3) contre la roue dentée principale (2), et avec un autre élément de ressort (9) par lequel la roue dentée tournante (4) est précontrainte dans la direction axiale (8) contre la roue dentée principale (2), où l'autre élément de ressort (9) présente des languettes (11), et où le moyeu (5) ou la roue dentée tournante (4) présente une rainure (12) s'étendant tout autour dans laquelle s'engagent au moins quelques-unes des languettes (11) de l'autre élément de ressort (9), **caractérisé en ce que** l'autre élément de ressort (9) est assuré au moins approximativement à l'encontre d'une rotation et est déformé au moins approximativement en forme d'onde contre un déplacement dans la direction périphérique (3) par rapport à la roue dentée tournante (4) ou la roue dentée principale (2).

2. Agencement de roue dentée (1) selon la revendication 1, **caractérisé en ce qu'**il est réalisé pour au moins une des languettes (11) de l'autre élément de ressort (9) un autre évidement (17) dans lequel s'engage la languette (11), en particulier avec son extrémité libre.

3. Agencement de roue dentée (1) selon la revendication 1, **caractérisé en ce qu'**un autre évidement (17) est réalisé à l'autre élément de ressort (9), et le moyeu (5) présente un prolongement pour l'engagement dans l'évidement (17).

4. Agencement de roue dentée (1) selon la revendication 2 ou 3, **caractérisé en ce que** l'autre évidement (17) présente une largeur maximale (19) qui est au moins approximativement aussi grande qu'une largeur maximale (20) de la languette (11) ou du prolongement au moyeu (5) dans la même direction.

5. Agencement de roue dentée (1) selon l'une des revendications 2 à 4, **caractérisé en ce que** l'autre évidement (17) est réalisé pour s'étendre d'une manière conique au moins par zones.

6. Agencement de roue dentée (1) selon l'une des revendications 2 à 5, **caractérisé en ce que** la languette (11) est réalisée pour s'étendre d'une manière conique au moins par zones.

7. Agencement de roue dentée (1) selon l'une des revendications 2 ou 3 à 6, **caractérisé en ce que** l'autre évidement (17) est réalisé entre deux élévations qui sont disposées au moyeu (5).

8. Agencement de roue dentée (1) selon l'une des revendications 2 ou 3 à 6, **caractérisé en ce que** l'autre évidement (17) est réalisé entre deux élévations qui sont disposées à la roue dentée tournante (4).

9. Agencement de roue dentée (1) selon l'une des revendications 1 à 8, **caractérisé en ce que** l'autre évidement (17) est réalisé dans la rainure (12) s'étendant tout autour.

10. Agencement de roue dentée (1) selon l'une des revendications 1 à 9, **caractérisé en ce qu'**à la place de la rainure (12) s'étendant tout autour, il est disposé par languette de l'autre élément de ressort (9) un évidement (17).

11. Agencement de roue dentée (1) selon l'une des revendications 1 à 10, **caractérisé en ce que** l'extrémité libre de l'autre élément de ressort (9) présente un coudage (23) qui pointe en direction du moyeu (5) ou de la roue dentée tournante (4).
